# EUROPÄISCHE PATENTSCHRIFT

(11) **EP 2 910 418 B1**
(45) Veröffentlichungstag und Bekanntmachung des Hinweises auf die Patenterteilung: **13.02.2019**
(21) Anmeldenummer: 14155977.3
(22) Anmeldetag: 20.02.2014
(51) Int. Cl.: B60P 7/08

(54) **Ladungssicherungseinrichtung für ein Nutzfahrzeug**
Load securing device for a commercial vehicle
Dispositif de sécurisation de charge pour un véhicule utilitaire

(43) Veröffentlichungstag der Anmeldung: 26.08.2015
(73) Patentinhaber: Schmitz Cargobull AG, 48341 Altenberge (DE)
(72) Erfinder: Wetter, Josef, 48341 Altenberge (DE)
(74) Vertreter: Cohausz & Florack

(56) Entgegenhaltungen:
- US-A1- 2002 048 495
- US-A1- 2005 079 026

## Beschreibung

Die Erfindung betrifft eine Ladungssicherungseinrichtung für ein Nutzfahrzeug, insbesondere Lastkraftwagen, Anhänger oder Sattelauflieger, mit einem Trägerprofil und wenigstens einer in das Trägerprofil eingeprägten und wenigstens eine Öffnung aufweisenden Vertiefung, wobei ein teilweise in der Vertiefung angeordnetes Zurrmittel zum Anbringen einer Ladungssicherung vorgesehen ist. Ferner betrifft die Erfindung ein Nutzfahrzeug, insbesondere Lastkraftwagen, Anhänger oder Sattelauflieger, mit einer ein Trägerprofil umfassenden Ladungssicherungseinrichtung, wobei das Trägerprofil ein, vorzugsweise äußerer, Längsträger, insbesondere des Ladebodens des Nutzfahrzeugs ist.

Unter Nutzfahrzeugen werden vorliegend solche verstanden, die für den Gütertransport im öffentlichen Straßenverkehr vorgesehen sind. Es handelt sich bei entsprechenden Nutzfahrzeugen beispielsweise um Lastkraftwagen, Anhänger oder Sattelauflieger. Die Nutzfahrzeuge stellen einen Ladeboden bereit, auf dem die zu transportierende Ladung abgestellt werden kann. Zudem können die Nutzfahrzeuge noch unterschiedliche Arten von Aufbauten aufweisen, die einen Laderaum für die zu transportierende Ladung definieren oder umschließen. Insbesondere kommen in diesem Zusammenhang sogenannte Kofferaufbauten und Planenaufbauten infrage.

Kofferaufbauten weisen feste Seitenwände, eine feste Stirnwand und ein festes Dach auf. Dadurch eignen sich die Kofferaufbauten für den sogenannten Trockentransport, also den Transport von feuchtigkeitsempfindlichen Gütern. Insbesondere werden die Seitenwände das Dach und die Stirnwand von Kofferaufbauten durch mehrschichtige Paneele gebildet, die eine Kernlage aus einem geschäumten Kunststoff aufweisen können. Somit wird eine gute thermische Isolierung des Laderaums erreicht, weshalb entsprechende Kofferaufbauten für den sogenannten Kühltransport, also den Transport von temperaturempfindlichen Gütern eingesetzt werden. Bei Planenaufbauten sind wie bei Kofferaufbauten an der Rückseite meist zwei Flügeltüren vorgesehen. Ansonsten wird bei Planenaufbauten aber wenigstens eine Seitenwand durch eine Plane verschlossen, die leicht geöffnet oder entlang der Seitenwand auf- und wieder zugeschoben werden kann. Derartige Nutzfahrzeugaufbauten werden auch als Curtainsider bezeichnet. Zudem kann bei Planenaufbauten auch das Dach mit einer bedarfsweise aufschiebbaren Plane verschlossen sein. Zudem werden meist feste Stirnwände vorgesehen, da das Be- und Entladen anderweitig erfolgen kann.

Ladungssicherungseinrichtungen der eingangs genannten Art sind bereits in verschiedenen Ausführungen bekannt. Sie dienen dazu, mit den Nutzfahrzeugen zu transportierende Ladung gegen ein versehentliches Verrutschen zu sichern. Dazu weisen die Ladungssicherungseinrichtungen sogenannte Zurrmittel auf, an denen Ladungssicherungsmittel befestigt werden können, welche die Ladung in Position halten. Als Ladungssicherungsmittel kommen insbesondere Zurrgurte, Seile, Netze, Ladebalken oder dergleichen infrage. Meist werden die Ladungssicherungsmittel mittels Haken oder Ösen am Zurrmittel der Ladungssicherungseinrichtung befestigt.

Für eine zufriedenstellende Ladungssicherung ist es zudem wünschenswert, wenn die Ladung in regelmäßigen Abständen am Nutzfahrzeug festgelegt werden kann. Auf diese Weise kann die Ladungssicherung an die jeweilige Ladungssituation angepasst werden. Deshalb weisen die aus dem Stand der Technik bekannten Ladungssicherungseinrichtungen typischerweise ein Trägerprofil auf, das in regelmäßigen Abständen eine Reihe von Zurrmitteln trägt. Bedarfsweise kann das Trägerprofil aber auch nur ein einziges Zurrmittel aufweisen.

Das wenigstens eine Zurrmittel kann im Trägerprofil teilweise in einer Vertiefung angeordnet sein, so dass das Zurrmittel den zur Verfügung stehenden Laderaum nicht einschränkt bzw. das Beladen und Entladen des Nutzfahrzeugs nicht behindert, jedenfalls solange das Zurrmittel nicht zur Ladungssicherung benötigt wird. Eine derartige Ladungssicherungseinrichtung ist aus der DE 198 06 448 A1 bekannt. Bei dieser Ladungssicherungseinrichtung ist das Trägerprofil als Rahmenprofil eines Nutzfahrzeugaufbaus ausgebildet. An der Oberseite des Trägerprofils sind in regelmäßigen Abständen Vertiefungen in das Trägerprofil eingelassen, in denen jeweils ein Zurrmittel wenigstens teilweise aufgenommen ist. Die Zurrmittel sind als U-förmige Bügel ausgebildet, die mit ihren parallelen Schenkeln durch Öffnungen in der Vertiefung greifen. Unterhalb der Öffnungen ist ein die beiden Schenkel verbindendes Abstützelement vorgesehen, das über Muttern, die auf Gewinde an den Enden der beiden parallelen Schenkel aufgeschraubt sind, unverlierbar am Zurrmittel gehalten wird.

Ein weiteres Beispiel einer Ladungssicherungseinrichtung, welches den Oberbegriff des Anspruchs 1 offenbart, ist aus der US 2002/0048495 A1 bekannt.

Das Zurrmittel kann demnach zur Ladungssicherung teilweise aus der Vertiefung herausgezogen und mit einem Ladungssicherungsmittel verbunden werden. Dabei stützt sich das Zurrmittel mit dem Abstützelement gegenüber der Unterseite der Vertiefung des Trägerprofils ab. Auf diese Weise werden die zur Ladungssicherung bereitgestellten Kräfte an das Trägerprofil abgeleitet.

Entsprechende Ladungssicherungseinrichtungen haben sich in der Praxis in den Fällen bewährt, in denen nur moderate Ladungssicherungskräfte aufgenommen und abgeleitet werden müssen. Sehr hohe Ladungssicherungskräfte können dagegen nicht mit der gewünschten Zuverlässigkeit aufgenommen und abgeleitet werden. Während die bekannten Ladungssicherungseinrichtungen Zugkräfte (Zurrkräfte) in der Größenordnung von etwa 2 Tonnen aufnehmen können, werden von Seiten der Betreiber der Nutzfahrzeuge immer öfter höhere Anforderungen an die Ladungssicherungseinrichtungen gestellt, deren Einhaltung mit den bestehenden Ladungssicherungseinrichtungen nicht gewährleistet werden können.

Um deutlich höhere Zugkräfte aufnehmen zu können, können die Ladungssicherungsmittel an mehreren Zurrmitteln festgelegt werden. Dadurch erhöht sich jedoch der Aufwand für die Sicherung der Ladung. Zudem kann das Trägerprofil der Ladungssicherungseinrichtung insgesamt stabiler ausgebildet werden, was jedoch zu einem höheren Materialaufwand und damit zu höheren Kosten führt. Um diesem Nachteil entgegenzuwirken, werden bei einigen Ladungssicherungseinrichtungen Öffnungen in das Trägerprofil geschnitten, um dort stabilere Aufnahmen für die Zurrmittel einzuschweißen, wobei die Aufnahmen wiederum Vertiefungen zur teilweisen Aufnahme der Zurrmittel bereitstellen können. In diesem Fall muss jedoch ein höherer Fertigungsaufwand für die Ladungssicherungseinrichtung in Kauf genommen werden.

Vor diesem Hintergrund liegt der vorliegenden Erfindung die Aufgabe zugrunde, die Ladungssicherungseinrichtung und das Nutzfahrzeug jeweils der eingangs genannten und zuvor näher beschriebenen Art derart auszugestalten und weiterzubilden, dass einfach und kostengünstig deutlich höhere Zugkräfte aufgenommen werden können.

Diese Aufgabe wird durch die Merkmale des Anspruchs 1 gelöst.

Die Erfindung hat also erkannt, dass durch die Verwendung eines zusätzlichen Stützelements hohe Ladungssicherungskräfte zuverlässig aufgenommen und abgeleitet werden können, ohne dass dies zu einem unverhältnismäßig hohen Materialeinsatz und/oder Arbeitsaufwand führt. Daher kann die Ladungssicherungseinrichtung einfach und kostengünstig hergestellt werden und bedarfsweise problemlos Zugkräften bis zu 5 Tonnen und mehr widerstehen.

Durch die Verwendung des Stützelements, das sich in wenigstens einer Stellung des Zurrmittels benachbart zur Vertiefung gegenüber dem Trägerprofil abstützt, können die im Falle der Ladungssicherung auf die Vertiefung wirkenden Lasten vermindert werden. Bedarfsweise kann sogar erreicht werden, dass bei der Ladungssicherung keine oder nur geringe Kräfte an die Vertiefung übertragen werden. Die Vertiefung wird dann mehr oder weniger vollständig entlastet. Das Stützelement kann sich bedarfsweise aber auch am Boden der Vertiefung abstützen. Das Stützelement kann dazu direkt oder indirekt mit dem Boden der Vertiefung verbunden sein. Auf diese Weise können die Ladungssicherungskräfte teilweise über die Vertiefung in das Trägerprofil abgeleitet werden. Dies kann eine weitere Aussteifung der Ladungssicherungseinrichtung bewirken.

Unter der wenigstens einen Stellung des Zurrmittels wird vorzugsweise die Stellung des Zurrmittels verstanden, die das Zurrmittel für den Fall einnimmt, dass Ladungssicherungskräfte über das Zurrmittel abgeleitet werden. Diese Stellung kann auch als Ladungssicherungsstellung oder Gebrauchsstellung bezeichnet werden. In dieser Stellung kann das Zurrmittel beispielsweise soweit aus der wenigstens einen Öffnung in der Vertiefung herausgezogen sein, dass sich das Zurrmittel über das Stützelement und das Stützelement gegenüber dem Trägerprofil abstützt. Ist das Zurrmittel dagegen in einer anderen Stellung beispielsweise weiter in die wenigstens eine Öffnung in der Vertiefung eingeschoben oder eingesteckt, was insbesondere in einer Wartestellung oder Nichtgebrauchsstellung des Zurrmittels der Fall sein wird, in der keine Ladungssicherungskräfte über das Zurrmittel auf das Trägerprofil übertragen werden, so muss das Stützelement die Vertiefung nicht umgreifen und muss das Stützelement auch nicht in der Lage sein, sich gegenüber dem Trägerprofil abzustützen.

In der Ladungssicherungsstellung oder Gebrauchsstellung erfolgt also eine Kraftableitung der von einem Ladungssicherungsmittel auf das Zurrmittel übertragenen Ladungssicherungskräfte zunächst auf das Stützelement und schließlich von dem Stützelement auf das Trägerprofil. Das Stützelement kann dabei teilweise oder vollständig an der Vertiefung anliegen. Letzteres ist jedoch grundsätzlich weniger bevorzugt. Einerseits ist die entsprechende Anpassung des Stützelements an die Vertiefung konstruktiv aufwendig. Andererseits kann das Stützelement versehentlich gegenüber der Vertiefung verrutschen, wodurch die aufzunehmenden Kräfte deutlich herabgesetzt werden können. Unter einer Abstützung des Stützelements benachbart zur Vertiefung ist daher insbesondere ein geringer Abstand zwischen dem Stützelement und der Vertiefung gemeint. Grundsätzlich können zwar auch recht große Abstände zwischen der Vertiefung und dem Stützelement vorgesehen sein, dies erfordert jedoch einen höheren Materialeinsatz und Platzbedarf, was grundsätzlich weniger bevorzugt ist. Besonders zufriedenstellende Ergebnisse können insbesondere dann erzielt werden, wenn der Abstand zwischen dem Stützelement und der Vertiefung zwischen 0 mm und 30 mm, insbesondere zwischen 0 mm und 20 mm, und bedarfsweise zwischen 5 mm und 20 mm beträgt, und zwar jeweils in horizontaler Längsrichtung, horizontaler Querrichtung und/oder in vertikaler Richtung. Dabei kann das Stützelement in vertikaler Richtung am Boden der Vertiefung anliegen, um so Ladungssicherungskräfte teilweise über die Vertiefung an das Trägerprofil abzuleiten.

Das Stützelement sollte die Vertiefung wenigstens teilweise umgreifen, damit sich das Stützelement sicher gegenüber dem Trägerprofil abstützen kann, auch wenn die Ladungssicherungskräfte vom Zurrmittel schräg auf das Stützelement übertragen werden. Dabei sollte das Stützelement die Vertiefung zudem so umfangreich, also über eine ausreichende Breite, umgreifen, so dass die bei der Kraftableitung über das Stützelement auf das Trägerprofil auftretenden Spannungsspitzen auf ein vertretbares Maß reduziert werden.

Zur Vermeidung einer unnötigen Anzahl von Bauteilen bietet es sich an, wenn sich das Zurrmittel direkt am Stützelement abstützt, sich das Stützelement direkt am Trägerprofil abstützt und/oder, bedarfsweise, sich das Stützelement direkt an der Vertiefung abstützt. Dies ist jedoch nicht erforderlich. Es kann sowohl zwischen dem Zurrmittel und dem Stützelement als auch zwischen dem Stützelement und dem Trägerprofil sowie zwischen dem Stützelement und der Vertiefung wenigstens ein weiteres Bauteil vorgesehen sein, über das sich das Zurrmittel gegenüber dem Stützelement und/oder das Stützelement gegenüber dem Trägerprofil bzw. der Vertiefung abstützt. Die Ladungssicherungskräfte werden dann also über das wenigstens eine Bauteil übertragen.

Bei einer ersten bevorzugten Ausgestaltung der Ladungssicherungseinrichtung umgreift das Stützelement in der wenigstens einen Stellung des Zurrmittels die Vertiefung umlaufend. Die über das Zurrmittel abzuleitenden Ladungssicherungskräfte können auf diese Weise über einen größeren Materialquerschnitt abgeleitet werden. Auf diese Weise wird ein Versagen des Stützelements vermieden bzw. können höhere Ladungssicherungskräfte abgeleitet werden. In diesem Zusammenhang ist es weiter bevorzugt, wenn sich das Stützelement umlaufend zur Vertiefung benachbart zur Vertiefung gegenüber dem Trägerprofil abstützt. Auf diese Weise wird eine große Fläche bereitgestellt, über die die Ladungssicherungskräfte vom Stützelement auf das Trägerprofil übertragen werden können. Auch in diesem Falle werden Spannungsspitzen vermieden, sei es im Stützelement, im Trägerprofil oder in dazwischen liegenden Bauteilen.

Zur Einsparung unnötiger Bauteile kann sich das Stützelement benachbart zur Vertiefung am Trägerprofil abstützen und/oder sich das Zurrmittel am Stützelement abstützen. Das Zurrmittel kommt dann direkt mit dem Stützelement in Anlage. Alternativ kommt das Stützelement direkt mit dem Trägerprofil in Anlage. Weitere Bauteile zwischen dem Trägerprofil und dem Stützelement bzw. zwischen den Zurrmittel und dem Stützelement, die der Übertragung und Ableitung von Ladungssicherungskräften dienen, sind in diesem Falle entbehrlich.

Um die Ladungssicherungseinrichtung einfach und kostengünstig herstellen zu können, bietet es sich an, wenn das Trägerprofil ein gerolltes Profil ist. Alternativ oder zusätzlich kann die Vertiefung durch Rollen in das Trägerprofil eingeprägt sein. In diesem Falle sind Schweißarbeiten und aufwändigere Prägearbeiten bzw. Umformarbeiten entbehrlich.

Um sicherzustellen, dass das Stützelement in geeigneter Weise gegenüber dem Trägerprofil ausgerichtet ist, wenn über das Stützelement Ladungssicherungskräfte abzuleiten sind, kann das Stützelement fest mit der Vertiefung und/oder dem Trägerprofil verbunden sein. Dabei bietet es sich insbesondere an, wenn sich das Stützelement gegenüber der Vertiefung und/oder dem Trägerprofil nicht oder nur minimal bewegen kann. Das Stützelement ist dann nicht nur in wenigstens einer Stellung des Zurrmittels wie zuvor beschrieben ausgerichtet, sondern unabhängig von der Stellung des Zurrmittels. So wird beispielsweise auch verhindert, dass das Stützelement versehentlich derart gegen die Vertiefung drückt, dass diese deformiert.

Bei einer weiter bevorzugten Ausgestaltung der Ladungssicherungseinrichtung ist die Vertiefung in einem ebenen Abschnitt des Trägerprofils eingeprägt. Dies bedeutet letztlich, dass die Randbereiche des Trägerprofils um die Vertiefung herum im Wesentlichen in einer gemeinsamen Ebene liegen. In diesem Falle wird das Stützelement bevorzugt zur im Wesentlichen senkrechten Kraftableitung an den ebenen Abschnitt des Trägerprofils ausgebildet sein. Auf diese Weise wird auch bei hohen zu übertragenden Ladungssicherungskräften eine Verformung bzw. ein Einknicken des Stützelements vermieden. Letztlich können auf diese Weise höhere Ladungssicherungskräfte übertragen werden.

Alternativ oder zusätzlich kann das Stützelement neben der Vertiefung einen senkrecht zum ebenen Abschnitt des Trägerprofils ausgerichteten Kraftableitungsabschnitt aufweisen. Wenigstens in diesem Kraftableitungsabschnitt wird die Kraft vom Stützelement in Richtung des ebenen Abschnitts des Trägerprofils senkrecht zu Letzterem abgeleitet, was für die Ableitung sehr hoher Ladungssicherungskräfte dienlich ist. In diesem Zusammenhang ist es besonders bevorzugt, wenn der zuvor beschriebene Kraftableitungsabschnitt angrenzend zum ebenen Abschnitt des Trägerprofils vorgesehen ist. Insbesondere kann der beschriebene Kraftableitungsabschnitt derart angrenzend zum ebenen Abschnitt des Trägerprofil sein, dass der Kraftableitungsabschnitt und der ebene Abschnitt des Trägerprofils aneinander anliegen. Alternativ könnte dazwischen noch ein weiteres Bauteil zur Kraftableitung vorgesehen sein.

Für eine Ableitung hoher Ladungssicherungskräfte und zur Entlastung der Vertiefung ist das Zurrmittel durch wenigstens eine Öffnung in der Vertiefung und wenigstens eine Öffnung im Stützelement hindurchgeführt. Gegenüber einem vollständigen Herausziehen des Zurrmittels aus den vorgenannten Öffnungen kann das Zurrmittel auf der der Vertiefung abgewandten Seite des Stützelements eine derartige Form aufweisen, dass das Zurrmittel wenigstens in der Ladungssicherungsstellung formschlüssig am Stützelement gehalten ist und z.B. nicht durch dessen Öffnung hindurch rutscht. Um die Kraftableitung zu verbessern und gleichzeitig das Zurrmittel besser in der wenigstens einen Öffnung führen zu können bzw. ein Abknicken des Zurrmittels zu verhindern, kann das Zurrmittel durch zwei Öffnungen in der Vertiefung und/oder zwei Öffnungen im Stützelement geführt sein. Grundsätzlich bevorzugt ist es aus konstruktiven Gründen, wenn die wenigstens eine Öffnung einen Durchmesser zwischen 5 mm und 35 mm, insbesondere zwischen 10 mm und 20 mm, aufweist.

Damit das Zurrmittel den zur Verfügung stehenden Laderaum nicht unnötig einschränkt bzw. das Beladen und Entladen nicht unverhältnismäßig behindert, kann das Zurrmittel ausgehend von einer Wartestellung oder Nichtgebrauchsstellung aus der wenigstens einen Öffnung und/oder der Vertiefung teilweise herausgezogen werden. Insbesondere ist das Zurrmittel auf diese Weise in der Wartestellung in Richtung des Laderaums im Trägerprofil versenkt, während es in der Ladungssicherungsstellung in den Laderaum hineinragt

In der Praxis hat es sich als besonders bevorzugt erwiesen, wenn das Zurrmittel als U-förmiger Bügel ausgebildet ist. Auf diese Weise können Ladungssicherungskräfte über zwei Schenkel des Zurrmittels abgeleitet werden und kann das Zurrmittel in geeigneter Weise in der Vertiefung bzw. in dem Trägerprofil geführt sein. Die Querstrebe und die beiden parallelen Schenkel des U-förmigen Bügels können dabei eine Materialstärke zwischen 5 mm und 35 mm, insbesondere zwischen 10 mm und 20 mm, aufweisen, um eine hohe Stabilität bei geringem Materialeinsatz zu gewährleisten.

Um eine sichere und zuverlässige Ableitung auch hoher Ladungssicherungskräfte gewährleisten zu können, kann das Zurrmittel auf der der Vertiefung abgewandten Seite des Stützelements ein Abstützelement aufweisen. Dabei ist das Abstützelement derart vorgesehen, dass sich das Zurrmittel in der wenigstens einen Stellung über das Abstützelement am Stützelement abstützt. Mithin können die Ladungssicherungskräfte über das Abstützelement großflächiger auf das Stützelement verteilt werden, als dies ohne das Abstützelement der Fall wäre. Im Zusammenhang mit der Verwendung eines U-förmigen Bügels als Zurrmittel bietet es sich der Einfachheit halber an, wenn das Abstützelement die beiden Schenkel des Zurrmittels miteinander verbindet. Auf diese Weise wird auch zwischen den Schenkeln des Zurrmittels eine Kraftübertragung vom Zurrmittel auf das Stützelement ermöglicht. Die Kraftableitung wird auf diese Weise gleichmäßiger, wodurch sich Spannungsspitzen verringern.

Alternativ oder zusätzlich ist es für eine gleichmäßige Ableitung von Ladungssicherungskräften förderlich, wenn das Stützelement in einer Längsrichtung des Stützelements und/oder einer Querrichtung des Stützelement bzw. einer Längsrichtung des Trägerprofils und/oder einer Querrichtung des Trägerprofils einen im Wesentlichen U-förmigen Querschnitt aufweist. Auf diese Weise kann verteilt über den Boden des Stützelements eine hohe Last in das Stützelement eingebracht werden, die dann wenigstens teilweise über die bevorzugt im Wesentlichen senkrecht zum Boden verlaufenden Schenkel des U-förmigen Stützelements zuverlässig an das Trägerprofil abgeleitet werden können. Besonders bevorzugt ist es in diesem Zusammenhang, wenn das Stützelement im Wesentlichen in allen Querrichtungen und/oder im Wesentlichen in allen Längsrichtungen U-förmige Querschnitte aufweist. Dies kann dadurch erreicht werden, dass das Stützelement im Wesentlichen wannenförmig ausgebildet ist.

Um die Ladungssicherung an die jeweilige Ladungssituation des Nutzfahrzeugs anpassen zu können, und die Ladungssicherungskräfte bedarfsweise über mehrere Zurrmittel ableiten zu können, kann längs des Trägerprofils eine Reihe von Vertiefungen mit darin teilweise angeordneten Zurrmitteln vorgesehen sein. Weiter bevorzugt ist es in diesem Zusammenhang, wenn die Vertiefungen im Wesentlichen regelmäßige Abstände zwischen einander aufweisen.

Zur Steigerung der zuverlässig abzuleitenden Ladungssicherungskräfte kann das Trägerprofil im Wesentlichen L-förmig ausgebildet sein. Dies kann auch so zu verstehen sein, dass das Trägerprofil einen im Wesentlichen L-förmig ausgebildet Abschnitt aufweist. In diesem Falle kann das Stützelement angrenzend zu dem Verbindungsbereich der beiden Schenkel des L-förmigen Abschnitts des Trägerprofils abgestützt sein. Auf diese Weise werden vom Stützelement Kräfte in unmittelbarer Nähe zum Verbindungsbereich der beiden Schenkel des L-förmigen Trägerprofils bzw. Trägerprofilabschnitts in das Trägerprofil eingeleitet. Die Kräfte werden dabei in einer Richtung im Wesentlichen parallel zu dem angrenzenden Schenkel des L-förmig ausgebildeten Trägerprofils bzw. Trägerprofilabschnitts eingeleitet. Dies stellt eine besonders stabile Ausgestaltung der Ladungssicherungseinrichtung dar, bei der eine übermäßige Deformation des Trägerprofils bei Einleitung der Ladungssicherungskräfte über das Stützelement vermieden wird. In der Praxis haben sich Abstände zwischen dem Stützelement und dem angrenzenden Schenkel des Trägerprofils zwischen 0 mm und 40 mm, insbesondere von kleiner 20 mm, bewährt.

Um eine hohe Stabilität bereitstellen und den Fertigungsaufwand gering halten zu können, ist das Trägerprofil, das Zurrmittel, das Stützelement und/oder das Abstützelement aus metallischen Werkstoffen gebildet. Es kann sich dabei um unterschiedliche oder aber gleichartige Werkstoffe, insbesondere um Stahl handeln.

Die eingangs genannte Aufgabe ist zudem bei einem Nutzfahrzeug nach dem Oberbegriff von Anspruch 15 dadurch gelöst, dass die Ladungssicherung nach einem der Ansprüche 1 bis 14 ausgebildet ist.

Auf diese Weise werden bei dem erfindungsgemäßen Nutzfahrzeug die gleichen Vorteile erzielt, die zuvor bereits unter Bezugnahme auf die einzelnen Merkmale im Zusammenhang mit den entsprechenden Ausgestaltungen der Ladungssicherungseinrichtung dargelegt worden sind. An dieser Stelle wird daher auf die entsprechenden vorstehenden Ausführungen Bezug genommen.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit zwei erfindungsgemäßen Ladungssicherungseinrichtungen in einer perspektivischen Ansicht,
- Fig. 2A-B: eine Ladungssicherungseinrichtung aus Fig. 1 in einer Schnittansicht entlang der Schnittebene II-II aus Fig. 1 in einer Wartestellung und einer Ladungssicherungsstellung und
- Fig. 3A-B: die Ladungssicherungseinrichtung aus Fig. 2 in einer Schnittansicht entlang der Schnittebene III-III aus Fig. 2 in einer Wartestellung und einer Ladungssicherungsstellung.

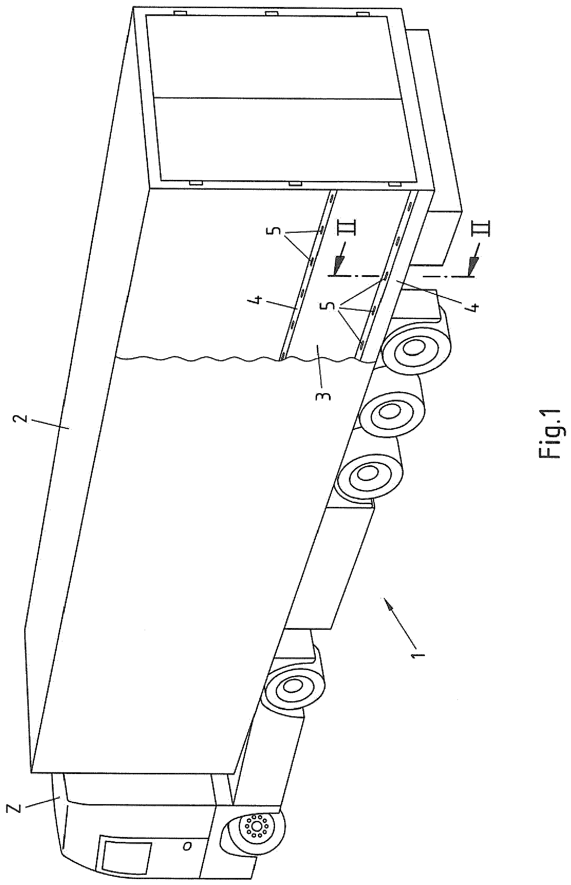

In der Fig. 1 ist ein Nutzfahrzeug 1 in Form eines Sattelaufliegers dargestellt, dass von einer Zugmaschine Z gezogen wird. Das dargestellte und insoweit bevorzugte Nutzfahrzeug 1 trägt einen Nutzfahrzeugaufbau 2 in Form eines Kofferaufbaus oder eines Planenaufbaus. Bedarfsweise könnte jedoch auch auf einen Nutzfahrzeugaufbau verzichtet werden. Beim dargestellten und insoweit bevorzugten Nutzfahrzeug 1 sind an den seitlichen Rändern des Ladebodens 3 auf den gegenüberliegenden Längsseiten äußere Trägerprofile 4 in Form von den Ladeboden 3 stützenden Längsträgern vorgesehen. In der Längserstreckung der durch Rollen hergestellten Trägerprofile 4 sind in regelmäßigen Abständen Vertiefungen 5 in die Trägerprofile 4 durch Rollen eingeprägt. In jeder der dargestellten Vertiefungen 5 ist ein Zurrmittel 6 wenigstens teilweise aufgenommen.

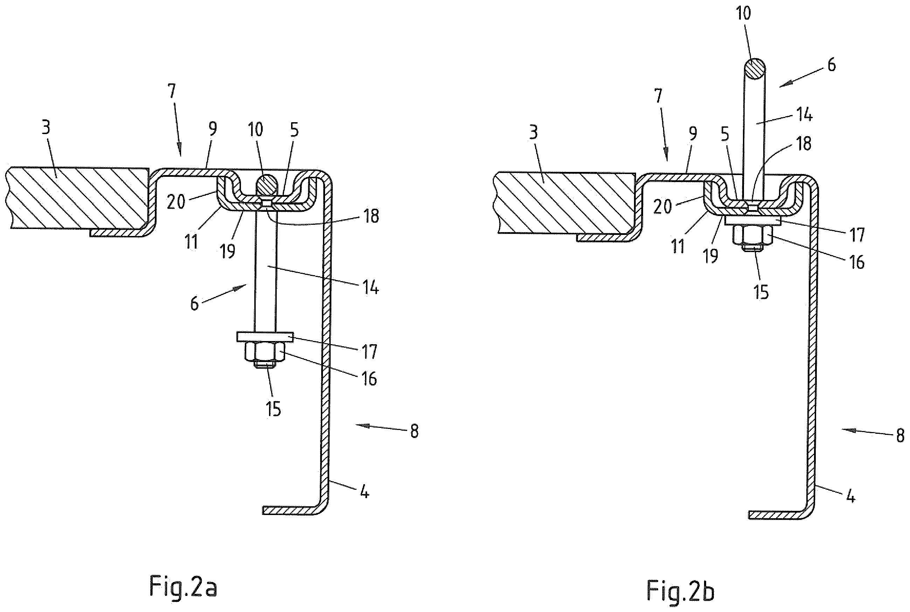

In der Fig. 2A und 2B ist ein Schnitt quer zum Trägerprofil 4 auf Höhe einer Vertiefung 5 dargestellt. Das Trägerprofil 4 weist beim dargestellten und insoweit bevorzugten Nutzfahrzeug 1 einen im Wesentlichen L-förmigen Querschnitt mit zwei etwa rechtwinklig zueinander ausgerichteten Schenkeln 7,8 auf. Der obere Schenkel 7 des Trägerprofils 4 stellt einen ebenen Abschnitt 9 des Trägerprofils 4 bereit, in dem die Vertiefung 5 vorgesehen ist. Dieser ebene Abschnitt 9 ist zudem in etwa bündig mit der Oberseite des an das Trägerprofil 4 grenzenden Ladebodens 3 ausgebildet Der angrenzende Schenkel 8 des Trägerprofils erstreckt sich dabei im Wesentlichen senkrecht zum Ladeboden 3, auf dem die Ladung abgestellt und mittels Ladungssicherungsmitteln gegen ein versehentliches Verrutschen gesichert ist (nicht dargestellt).

In der Vertiefung 5 des Trägerprofils 4 ist ein Zurrmittel 6 in Form eines U-förmigen Bügels teilweise aufgenommen. Dabei handelt es sich insbesondere um die obere Querstrebe 10 des Zurrmittels 6. Die Vertiefung 5 ist dabei so weit in das Trägerprofil 4 eingeprägt, dass die Vertiefung 5 die obere Querstrebe 10 des U-förmiger Bügels vollständig aufnimmt, so dass das Zurrmittel 6 in der in der Fig. 2A dargestellten Nichtgebrauchsstellung bzw. Wartestellung nicht gegenüber dem Niveau des Ladebodens 3 vorsteht.

Beim dargestellten und insoweit bevorzugten Nutzfahrzeug 1 ist die Vertiefung 5 bevorzugt zwischen 50 mm bis 150 mm, insbesondere zwischen 75 mm und 100 mm, lang sowie zwischen 15 mm und 60 mm, insbesondere zwischen 25 mm und 45 mm, breit. Die dargestellte und insoweit bevorzugte Vertiefung 5 weist in Längsrichtung und in Querrichtung Flankenabschnitte auf, die im Wesentlichen senkrecht zum ebenen Abschnitt 9 des Trägerprofils 4 ausgerichtet sind. Die Flankenabschnitte der Vertiefung 5 in Längsrichtung und/oder in Querrichtung könnten alternativ auch zur entsprechenden Senkrechten geneigt sein, und zwar bedarfsweise in einem Winkel zwischen 30° und 50°. Beim dargestellten und insoweit bevorzugten Nutzfahrzeug 1 ist die Vertiefung 5 zudem vorzugsweise zwischen 5 mm und 25 mm, insbesondere zwischen 10 mm und 15 mm, tief ausgebildet. Im Übrigen beträgt die Materialstärke der Vertiefung 5 und beim dargestellten und insoweit bevorzugten Nutzfahrzeug 1 folglich auch die Materialstärke des Trägerprofils 4 zwischen 2 mm und 5 mm, insbesondere zwischen 3 mm und 4 mm.

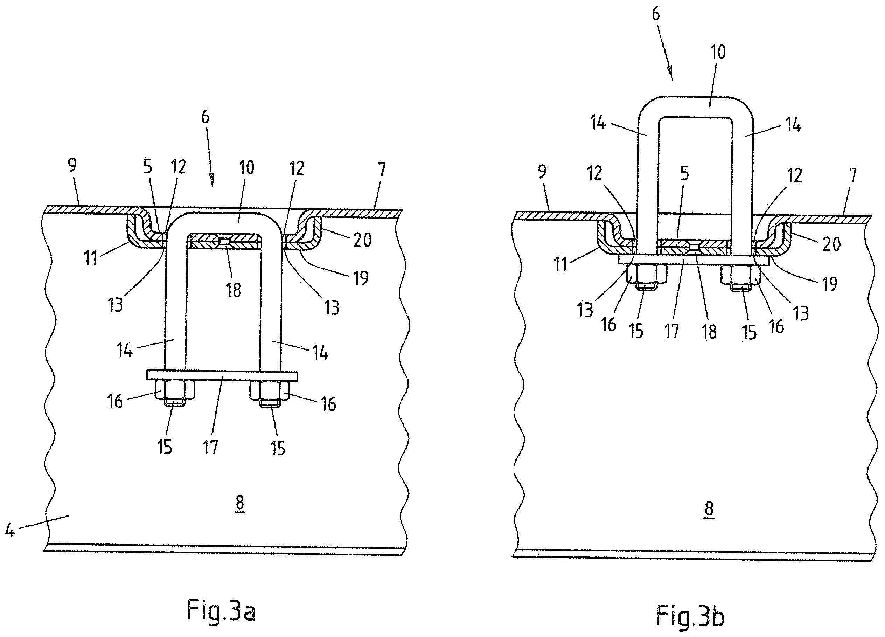

Die Aufnahme des Zurrmittels 6 in der Vertiefung 5 des Trägerprofils 4 ist ebenfalls in den Fig. 3A und 3B in der Wartestellung und in der Ladungssicherungsstellung dargestellt, jedoch in einem Schnitt längs des Trägerprofils 4. In der Vertiefung 5 und in einem darunter vorgesehenen Stützelement 11 sind jeweils zwei, vorzugsweise gleich weit voneinander beabstandete, Öffnungen 12,13 vorgesehen, durch die die beiden parallelen Schenkel 14 des Zurrmittels 6 hindurchgeführt sind. Die Öffnungen 12,13 weisen beim dargestellten und insoweit bevorzugten Nutzfahrzeug 1 einen Durchmesser von etwa 15 mm auf. Unterhalb des Stützelements 11 weisen die freien Enden der Schenkel 14 des Zurrmittels 6 jeweils ein Gewinde 15 auf. Auf jedes Gewinde 15 ist eine Mutter 16 aufgeschraubt. Auf den Muttern 16 liegt ein Abstützelement 17, das mittels entsprechender Öffnungen auf die beiden parallelen Schenkel 14 des Zurrmittels 6 aufgefädelt ist. Die Schenkel 14 und die Querstrebe 10 des Zurrmittels 6 weisen beim dargestellten und insoweit bevorzugten Nutzfahrzeug 1 einen Durchmesser von etwa 15 mm auf. Die Unterseite des Stützelements 11 und die Oberseite des Abstützelements 17 sind so aneinander angepasst, dass diese möglichst vollflächig aneinander in Anlage gelangen, wenn das Zurrmittel 6 aus der Vertiefung 5 in die Ladungssicherungsstellung herausgezogen wird, die in den Fig. 2B und 3B dargestellt ist.

Das Stützelement 11 umgreift die Vertiefung 5 sowohl in Querrichtung als auch in Längsrichtung des Nutzfahrzeugs 1. Dazu ist das Stützelement 11 wannenförmig ausgebildet und in Längsrichtung und in Querrichtung geringfügig von der Vertiefung 5 beabstandet. Der Abstand beträgt vorzugsweise weniger als 20 mm, bedarfsweise weniger als 10 mm. Das Stützelement 11 weist dabei einen im Wesentlichen U-förmigen Querschnitt sowohl in Längsrichtung als auch in Querrichtung des Nutzfahrzeugs 1 auf. Beim dargestellten und insoweit bevorzugten Nutzfahrzeug 1 umgreift das Stützelement 11 die Vertiefung 5 folglich umlaufend. Ferner beträgt die Materialstärke des Stützelements 11 beim dargestellten und insoweit bevorzugten Nutzfahrzeug 1 zwischen 2 mm und 5 mm, insbesondere zwischen 3 mm und 4 mm.

Um die Positionierung des Stützelements 11 gegenüber der Vertiefung 5 festzulegen, ist das Stützelement 11 über einen Niet 18 mit der Vertiefung 5 fest verbunden. Zudem ist der Boden 19 des Stützelements 11 beim dargestellten und insoweit bevorzugten Nutzfahrzeug 1 annähernd eben ausgebildet oder leicht nach unten gewölbt, während die Seitenränder des Stützelements 11 im Wesentlichen senkrecht zu dem ebenen Abschnitt 9 des Trägerprofils 4 ausgerichtet sind, gegenüber dem sich das Stützelement 11 abstützt. Diese Seitenränder können auch als Kraftableitungsabschnitte 20 verstanden werden, welche die Ladungssicherungskräfte im Wesentlichen senkrecht in Richtung des ebenen Abschnitts 9 des Trägerprofils 4 ableiten. Beim dargestellten und insoweit bevorzugten Nutzfahrzeug 1 sind die Kraftableitungsabschnitte 20 im Wesentlichen umlaufend zu der Vertiefung 5 vorgesehen.

Das Stützelement 11 stützt sich beim dargestellten und insoweit bevorzugten Trägerprofil 4 jenseits der äußeren Rundungen der Vertiefung 5 im Trägerprofil 4 am Trägerprofil 4 ab. Der Bereich der Rundungen der Vertiefung 5 wird dadurch entlastet. Ein Längsrand des Stützelements 11 stützt sich unmittelbar angrenzend zu einem im Wesentlichen senkrecht umgebogenen Schenkel 8 des Trägerprofils 4 ab. Dieser Abstand ist ebenso wie der Abstand zwischen der Vertiefung 5 und dem Stützelement 11 vorzugsweise kleiner als 3 cm, weiter vorzugsweise kleiner als 2 cm und insbesondere kleiner als 1 cm. Beim darstellen und insoweit bevorzugten Stützelement 11 liegt das Stützelement 11 mit seinem umlaufenden Rand direkt von unten am Trägerprofil 4 an. Zudem ist der obere Rand des Stützelements 11 angrenzend zum Trägerprofil 4 im Wesentlichen senkrecht zu dem ebenen Abschnitt 9 des Trägerprofils 4 ausgerichtet, indem die Vertiefung 5 eingeprägt ist. Zudem stützt sich beim dargestellten und insoweit bevorzugten Nutzfahrzeug 1 das Stützelement 11 teilweise an der Vertiefung 5 ab. Dazu ist der Boden der Vertiefung 5 in Anlage mit dem Boden 19 des Stützelements 11. Bedarfsweise könnte aber auch ein Spalt zwischen den Böden 19 des Stützelements 11 und der Vertiefung 5 vorgesehen sein.

Nicht im Einzelnen dargestellt ist die Verbindung eines Ladungssicherungsmittels mit dem Zurrmittel 6. In der Regel kann ein Haken den Querriegel 10 des Zurrmittels 6 hintergreifen, nachdem dieser teilweise aus der Vertiefung 5 herausgezogen worden ist. Die Zugkräfte, die von dem Ladungssicherungsmittel auf das Zurrmittel 6 übertragen werden, sorgen dann dafür, dass sich das Zurrmittel 6 gegenüber dem Stützelement 11 und damit gegenüber dem Trägerprofil 4 abstützt, um die auftretenden Ladungssicherungskräfte sicher und zuverlässig auf das Trägerprofil 4 abzuleiten.

## Patentansprüche

1. Ladungssicherungseinrichtung für ein Nutzfahrzeug (1), insbesondere Lastkraftwagen, Anhänger oder Sattelauflieger, mit einem Trägerprofil (4) und wenigstens einer in das Trägerprofil (4) eingeprägten und wenigstens eine Öffnung (12) aufweisenden Vertiefung (5), wobei ein teilweise in der Vertiefung (5) angeordnetes Zurrmittel (6) zum Anbringen einer Ladungssicherung vorgesehen ist und wobei in wenigstens einer Stellung des Zurrmittels (6) ein die Vertiefung (5) wenigstens teilweise umgreifendes, sich benachbart zur Vertiefung (5) gegenüber dem Trägerprofil (4) abstützendes Stützelement (11) vorgesehen ist und sich das Zurrmittel (6) über das Stützelement (11) gegenüber dem Trägerprofil (4) abstützt,
**dadurch gekennzeichnet, dass**
das Zurrmittel (6) durch wenigstens eine Öffnung (12) in der Vertiefung (5) und durch wenigstens eine Öffnung (13) im Stützelement (11) geführt ist.

2. Ladungssicherungseinrichtung nach Anspruch 1,
dadurch gelkennzeichnet, dass
das Stützelement (11) in der wenigstens einen Stellung des Zurrmittels (6) die Vertiefung (5) umlaufend umgreift und, vorzugsweise, sich umlaufend sowie benachbart zur Vertiefung (5) gegenüber dem Trägerprofil (4) abstützt.

3. Ladungssicherungseinrichtung nach Anspruch 1 oder 2,
**dadurch gekennzeichnet, dass**
sich das Stützelement (11) benachbart zur Vertiefung (5) am Trägerprofil (4) abstützt und/oder sich das Zurrmittel (6) am Stützelement (11) abstützt.

4. Ladungssicherungseinrichtung nach einem der Ansprüche 1 bis 3,
**dadurch gekennzeichnet, dass**
das Trägerprofil (4) ein gerolltes Profil ist und/oder dass die Vertiefung (5) durch Rollen in das Trägerprofil (4) eingeprägt ist.

5. Ladungssicherungseinrichtung nach einem der Ansprüche 1 bis 4,
**dadurch gekennzeichnet, dass**
das Stützelement (11), vorzugsweise über eine Nietverbindung, gegenüber der Vertiefung (5) und/oder dem Trägerprofil (4) festgelegt ist.

6. Ladungssicherungseinrichtung nach einem der Ansprüche 1 bis 5,
**dadurch gekennzeichnet, dass**
das die Vertiefung (5) in einen ebenen Abschnitt (9) des Trägerprofils (4) eingeprägt ist und dass das Stützelement (11) zur im Wesentlichen senkrechten Kraftableitung an den ebenen Abschnitt (9) ausgebildet ist.

7. Ladungssicherungseinrichtung nach einem der Ansprüche 1 bis 6,
**dadurch gekennzeichnet, dass**
das Stützelement (11) neben der Vertiefung (5), und vorzugsweise angrenzend zum ebenen Abschnitt (9) des Trägerprofils (4), einen senkrecht zum ebenen Abschnitt (9) des Trägerprofils (4) ausgerichteten Kraftableitungsabschnitt (20) aufweist.

8. Ladungssicherungseinrichtung nach einem der Ansprüche 1 bis 7,
**dadurch gekennzeichnet, dass**
das Zurrmittel (6) durch zwei Öffnungen (12), in der Vertiefung (5) und durch wenigstens zwei Öffnungen (13) im Stützelement (11) geführt ist.

9. Ladungssicherungseinrichtung nach einem der Ansprüche 1 bis 8,
**dadurch gekennzeichnet, dass**
das Zurrmittel (6) ausgehend von einer Wartestellung aus der wenigstens einen Öffnung (12,13) und/oder der Vertiefung (5) in eine Gebrauchsstellung herausgezogen werden kann.

10. Ladungssicherungseinrichtung nach einem der Ansprüche 1 bis 9,
**dadurch gekennzeichnet, dass**
das Zurrmittel (6) als U-förmiger Bügel ausgebildet ist.

11. Ladungssicherungseinrichtung nach einem der Ansprüche 1 bis 10,
**dadurch gekennzeichnet, dass**
das Zurrmittel (6) auf der der Vertiefung (5) abgewandten Seite des Stützelements (11) ein Abstützelement (17) aufweist, dass sich das Zurrmittel (6) in der wenigstens einen Stellung des Zurrmittels (6) über das Abstützelement (17) am Stützelement (11) abstützt und, vorzugsweise, dass das Abstützelement (17) zwei Schenkel (14) des Zurrmittels (6), vorzugsweise des U-förmigen Bügels, miteinander verbindet.

12. Ladungssicherungseinrichtung nach einem der Ansprüche 1 bis 11,
**dadurch gekennzeichnet, dass**
das Stützelement (11) in einer Längsrichtung und/oder einer Querrichtung des Stützelements (11) und/oder des Trägerprofils (4) einen im Wesentlichen U-förmigen Querschnitt aufweist.

13. Ladungssicherungseinrichtung nach einem der Ansprüche 1 bis 12,
**dadurch gekennzeichnet, dass**
längs des Trägerprofils (4), vorzugsweise in regelmäßigen Abständen, eine Reihe von Vertiefungen (5) mit darin teilweise angeordneten Zurrmitteln (6) vorgesehen sind.

14. Ladungssicherungseinrichtung nach einem der Ansprüche 1 bis 13,
**dadurch gekennzeichnet, dass**
das Trägerprofil (4) im Wesentlichen L-förmig ausgebildet ist und dass, vorzugsweise, sich das Stützelement (11) angrenzend zu dem Verbindungsbereich der beiden Schenkel (7,8) des L-förmig ausgebildeten Trägerprofils (4) gegenüber dem Trägerprofil (4) abstützt.

15. Nutzfahrzeug (1), insbesondere Lastkraftwagen, Anhänger oder Sattelauflieger, mit einer ein Trägerprofil (4) umfassenden Ladungssicherungseinrichtung, wobei das Trägerprofil (4) ein, vorzugsweise äußerer, Längsträger, insbesondere des Ladebodens (3) des Nutzfahrzeugs (1) ist,
**dadurch gekennzeichnet, dass**
die Ladungssicherungseinrichtung nach einem der Ansprüche 1 bis 14 ausgebildet ist.

## Claims

1. Load securing device for a commercial vehicle (1), in particular trucks, trailers or semitrailers, with a support profile (4) and at least one recess (5) stamped in the support profile (4) and comprising at least one opening (12), wherein a lashing means (6) is provided partially arranged in the recess (5) to attach a load securing device, and wherein a support element (11) at least partially surrounding the recess (5) in at least one position of the lashing means (6) is provided, supported adjacent to the recess (5) relative to the support profile (4), and the lashing means (6) is supported via the support element (11) relative to the support profile (4),
**characterised in that**
the lashing means (6) are guided through at least one opening (12) in the recess (5) and through at least one opening (13) in the support element (11).

2. Load securing device according to claim 1,
**characterised in that**
the support element (11) in the at least one position of the lashing means (6) circumferentially surrounds the recess (5) and, preferably, is supported circumferentially and adjacent to the recess (5), relative to the support profile (4).

3. Load securing device according to claim 1 or 2,
**characterised in that**
the support element (11) is supported adjacent to the recess (5) on the support profile (4) and/or the lashing means (6) is supported on the support element (11).

4. Load securing device according to any one of the claims 1 to 3,
**characterised in that**
the support profile (4) is a rolled profile and/or that the recess (5) is stamped by rolling in the support profile (4).

5. Load securing device according to any one of the claims 1 to 4,
**characterised in that**
the support element (11) is fixed, preferably via a rivet connection, relative to the recess (5) and/or the support profile (4).

6. Load securing device according to any one of the claims 1 to 5,
**characterised in that**
the recess (5) is stamped in a flat section (9) of the support profile (4), and that the support element (11) is formed for substantially vertical force dissipation to the flat section (9).

7. Load securing device according to any one of the claims 1 to 6,
**characterised in that**
the support element (11) adjacent to the recess (5), and preferably adjacent to the flat section (9) of the support profile (4), comprises a force dissipation section (20) arranged perpendicularly to the flat section (9) of the support profile (4).

8. Load securing device according to any one of the claims 1 to 7,
**characterised in that**
the lashing means (6) is guided through two openings (12) in the recess (5) and through at least two openings (13) in the support element (11).

9. Load securing device according to any one of the claims 1 to 8,
**characterised in that**
the lashing means (6) may be pulled out of a standby position from the at least one opening (12,13) and/or the recess (5) into a use position.

10. Load securing device according to any one of the claims 1 to 9,
**characterised in that**
the lashing means (6) is designed as a U-shaped bracket.

11. Load securing device according to any one of the claims 1 to 10,
**characterised in that**
the lashing means (6) comprises a bracing element (17) on the side of the support element (11) facing away from the recess (5), **in that** the lashing means (6) are supported in the at least one position of the lashing means (6) on the support element (11) via the bracing element (17) and, preferably, **in that** the bracing element (17) links together two legs (14) of the lashing means (6), preferably of the U-shaped bracket.

12. Load securing device according to any one of the claims 1 to 11,
**characterised in that**
the support element (11) has a substantially U-shaped cross-section in a longitudinal direction and/or a transverse direction of the support element (11) and/or the support profile (4).

13. Load securing device according to any one of the claims 1 to 12,
**characterised in that**
a series of recesses (5) are provided along the support profile (4), preferably at regular intervals, with lashing means (6) partially arranged therein.

14. Load securing device according to any one of the claims 1 to 13,
**characterised in that**
the support profile (4) is formed substantially L-shaped, and **in that**, preferably, the support member (11) adjacent to the connecting region of both legs (7,8) of the L-shaped support profile (4) is supported relative to the support profile (4).

15. Commercial vehicle (1), in particular trucks, trailers or semitrailers, with a load securing device comprising a support profile (4), wherein the support profile (4) is, preferably an outer, longitudinal side member, in particular of the loading floor (3) of the commercial vehicle (1),
**characterised in that**
the load securing device is designed according to any one of the claims 1 to 14.

## Revendications

1. Dispositif de sécurisation de charge pour un véhicule utilitaire (1), en particulier camion, remorque ou semi-remorque, avec un profilé porteur (4) et au moins une cavité (5) imprimée dans le profilé porteur (4) et présentant au moins une ouverture (12), où l'on prévoit un moyen d'arrimage (6) agencé partiellement dans la cavité (5) pour la mise en place d'une sécurisation de charge, et où l'on prévoit, dans au moins une position du moyen d'arrimage (6), un élément de support (11) prenant appui à proximité de la cavité (5) par rapport au profilé porteur (4), entourant, au moins partiellement, la cavité (5) et le moyen d'arrimage (6) prend appui à l'aide de l'élément de support (11) par rapport au profilé porteur (4),
**caractérisé en ce que**
le moyen d'arrimage (6) est conduit, à travers au moins une ouverture (12), dans la cavité (5) et, à travers au moins une ouverture (13), dans l'élément de support (11).

2. Dispositif de sécurisation de charge selon la revendication 1,
**caractérisé en ce que**
l'élément de support (11), dans au moins une position du moyen d'arrimage (6), entoure le pourtour de la cavité (5) et, de préférence, prend appui sur le pourtour ainsi qu'à proximité de la cavité (5) par rapport au profilé porteur (4).

3. Dispositif de sécurisation de charge selon la revendication 1 ou 2,
**caractérisé en ce que**
l'élément de support (11) prend appui à proximité de la cavité (5) sur le profilé porteur (4) et/ou le moyen d'arrimage (6) prend appui sur l'élément de support (11).

4. Dispositif de sécurisation de charge selon l'une des revendications 1 à 3,
**caractérisé en ce que**
le profilé porteur (4) est un profilé enroulé et/ou **en ce que** la cavité (5) est imprimée par roulement dans le profilé porteur (4).

5. Dispositif de sécurisation de charge selon l'une des revendications 1 à 4,
**caractérisé en ce que**
l'élément de support (11) est fixé, de préférence par le biais d'un assemblage rivé, par rapport à la cavité (5) et/ou au profilé porteur (4).

6. Dispositif de sécurisation de charge selon l'une des revendications 1 à 5,
**caractérisé en ce que**
la cavité (5) est imprimée dans une section plane (9) du profilé porteur (4) et **en ce que** l'élément de support (11) est conçu pour la répartition essentiellement verticale de la force sur la section plane (9).

7. Dispositif de sécurisation de charge selon l'une des revendications 1 à 6,
**caractérisé en ce que**
l'élément de support (11) à côté de la cavité (5), et de préférence adjacent à la section plane (9) du profilé porteur (4), présente une section de répartition de force (20) dirigée verticalement par rapport à la section plane (9) du profilé porteur (4).

8. Dispositif de sécurisation de charge selon l'une des revendications 1 à 7,
**caractérisé en ce que**
le moyen d'arrimage (6) est conduit à travers deux ouvertures (12) dans la cavité (5) et à travers au moins deux ouvertures (13) dans l'élément de support (11).

9. Dispositif de sécurisation de charge selon l'une des revendications 1 à 8,
**caractérisé en ce que**
le moyen d'arrimage (6) peut être extrait hors d'au moins une ouverture (12, 13) et/ou de la cavité (5), à partir d'une position d'attente dans une position d'utilisation.

10. Dispositif de sécurisation de charge selon l'une des revendications 1 à 9,
**caractérisé en ce que**
le moyen d'arrimage (6) est conçu en tant qu'étrier en forme de U.

11. Dispositif de sécurisation de charge selon l'une des revendications 1 à 10,
**caractérisé en ce que**
le moyen d'arrimage (6) présente, sur le côté de l'élément de support (11) opposé à la cavité (5), un élément d'appui (17), **en ce que** le moyen d'arrimage (6) prend appui, dans au moins une position du moyen d'arrimage (6), à l'aide d'un élément d'appui (17), sur l'élément de support (11) et, de préférence, **en ce que** l'élément d'appui (17) relie ensemble deux pattes (14) du moyen d'arrimage (6), de préférence des étriers en forme de U.

12. Dispositif de sécurisation de charge selon l'une des revendications 1 à 11,
**caractérisé en ce que**
l'élément de support (11) présente dans une direction longitudinale et/ou dans une direction transversale de l'élément de support (11) et/ou du profilé porteur (4) une section transversale essentiellement en forme de U.

13. Dispositif de sécurisation de charge selon l'une des revendications 1 à 12,
**caractérisé en ce que**
l'on prévoit, le long du profilé porteur (4), de préférence à des distances régulières, une rangée de cavités (5) avec des moyens d'arrimage (6) y étant partiellement agencés.

14. Dispositif de sécurisation de charge selon l'une des revendications 1 à 13,
**caractérisé en ce que**
le profilé porteur (4) est conçu essentiellement en forme de L et **en ce que**, de préférence, l'élément de support (11) prend appui, à proximité de la zone de raccordement des deux pattes (7, 8) du profilé porteur (4) conçu en forme de L, par rapport au profilé porteur (4).

15. Véhicule utilitaire (1), en particulier camion, remorque ou semi-remorque, avec un profilé porteur (4) comportant un dispositif de sécurisation de charge, où le profilé porteur (4) est un longeron, de préférence extérieur, en particulier du fond de chargement (3) du véhicule utilitaire (1),
**caractérisé en ce que**
le dispositif de sécurisation de charge est conçu selon l'une des revendications 1 à 14.
